# EUROPÄISCHE PATENTSCHRIFT

(11) **EP 0 653 851 B1**
(45) Veröffentlichungstag und Bekanntmachung des Hinweises auf die Patenterteilung: **03.02.1999**
(21) Anmeldenummer: 94203243.4
(22) Anmeldetag: 07.11.1994
(51) Int. Cl.: H04B 1/40

(54) **Mehrband-Funkgerät**
Multiband radio transceiver
Radio-émetteur-récepteur multibande

(30) Priorität: 12.11.1993 DE 4338721
(43) Veröffentlichungstag der Anmeldung: 17.05.1995
(73) Patentinhaber: Philips Patentverwaltung GmbH, 22335 Hamburg (DE); Koninklijke Philips Electronics N.V., 5621 BA Eindhoven (NL)
(72) Erfinder: Saur, Erich, Dr., c/o Philips Patentverw. GmbH, D-20097 Hamburg (DE); Marshall, Christopher Dr.,., D-20097 Hamburg (DE)
(74) Vertreter: Volmer, Georg, Dipl.-Ing.

(56) Entgegenhaltungen:
- EP-A- 0 496 498
- EP-A- 0 541 305
- EP-A- 0 597 653
- ELECTRONICS WORLD AND WIRELESS WORLD, Bd. 99, Nr. 1688, 1.Juli 1993 Seiten 542-546, XP 000378437 'UHF TECHNOLOGY FOR THE CORDLESS REVOLUTION'
- MICROWAVE JOURNAL, Bd. 36, Nr. 8, August 1993 NORWOOD, MA, US, Seite 120 'A low cost, plastic packaged, 2.4GHz transceiver MMIC'
- ELECTRONICS & WIRELESS WORLD, Bd. 92, Nr. 1610, Dezember 1986 Seite 95 'Working both ways'
- elrad 1979, Heft 9 und 10, Seiten 10-13 und 20-23, K.W. Betz: "SSB Transceiver"

## Beschreibung

Die Erfindung betrifft ein Funkgerät für mindestens ein erstes und/oder mindstens ein zweites Frequenzband mit einer Zwischenfrequenzumsetzung mittels einer Mischfrequenz.

Mehrband-Funkgeräte ermöglichen beispielsweise als Mobilfunkgeräte wechselweise die Teilnahme an mindestens zwei verschiedenen Funksystemen.

Aus US 5,020,092 ist ein Mobilfunkgerät bekannt dessen erstes Frequenzband den Bereich von 915 - 940 Mhz und dessen zweites Frequenzband den Bereich von 860 - 885 MHz abdeckt. Zur Einstellung eines bestimmten Funkkanals in einem der beiden Frequenzbänder wird mittels eines Referenzoszillators und eines Frequenzsynthesizer eine erste Mischfrequenz erzeugt, mit der das Antenneneingangssignal in einem ersten Mischer gemischt wird. Von der erhaltenen ersten Zwischenfrequenzlage wird das Empfangssignal nach Verstärkung und Filterung mittels eines zweiten Oszillators und eines zweiten Mischers in eine zweite Zwischenfrequenzlage umgesetzt. Nach Durchlaufen eines Bandpassfilters, dessen Bandbreite in Abhängigkeit vom gewählten Frequenzband umschaltbar ist, wird das Empfangssignal schließlich demoduliert.

Bei diesem bekannten Mehrband-Funkgerät wird für beide Frequenzbänder die gleiche erste Zwischenfrequenzstufe benutzt. Wegen der relativ nahe beieinanderliegenden Frequenzbänder (860 - 885 MHz beziehungsweise 915-940 MHz) kann der benutzte Mischoszillator, so ausgelegt werden, daß er den für eine Abwärtsmischung beziehungsweise eine Aufwärtsmischung beider Funkbänder benötigten Frequenzbereich vollständig umfaßt.

Bei der Entwicklung von Mehrband Funkgeräten mit relativ weit auseinanderliegenden Funkbändern hat es sich gezeigt, daß bei Verwendung eines gemeinsamen Mischoszillators für beide Funkbänder verschiedene Probleme auftreten. Zur Durchstimmung des Mischoszillators in beiden Frequenzbändern sind insbesondere an die spektrale Reinheit des Oszillators bei gleichzeitig großem Abstimmbereich und Pegelkonstanz hohe Anforderungen zu stellen, die zwar prinzipiell lösbar sind, jedoch auch mit entsprechenden Kosten verbunden sind. Außerdem wird zur Minimierung der Nebenempfangsstellen nach dem Stand der Technik die Zwischenfrequenz etwa bei 10 % der Empfangsfrequenz gewählt. Bei sehr weit auseinanderliegenden Bändern sind somit unterschiedliche Filter notwendig, was die Bauteile- und Lagerkosten erhöht.

Aus JP-A 05-244 032 ist ein Funkgerät bekannt, bei dem die vorgesehene Mischfrequenz ungefähr in der Frequenzmitte zwischen erstem und zweitem Frequenzband gewählt ist.

Aus "ELRAD" 1979, Heft 9 und 10, Seiten 10 bis 13 und 20 bis 23, K.W. Betz: "SSB Transceiver" geht ein Funkgerät für ein erstes und zweites Frequenzband hervor. Verwendet wird eine Mischoszillatorfrequenz von 5 - 5,5 MHz. Für das erste und zweite Band ist ein gemeinsamer Mischoszillator vorgesehen, die Zf ist mit 9 MHz für Sende- und Empfangsteil gleich.

Aus US-A-4584716 ist ferner ein Kurzwellenempfänger bekannt, bei welchem die Mischfrequenz genau zwischen zwei diskreten Empfangsfrequenzen angeordnet ist.

Aufgabe der Erfindung ist es, ein Funkgerät der eingangs genannten Art anzugeben, welches sich besonders gut für relativ weit auseinanderliegende Funkbänder eignet.

Diese Aufgabe wird bei einem Funkgerät der eingangs genannten Art durch die im kennzeichnenden Teil des Anspruchs 1 angegebenen Merkmale gelöst.

Bei dem unteren Frequenzband kann auf diese Weise als Zwischenfrequenz die Differenz zwischen Mischoszillatorfrequenz und der zu empfangenden Frequenz des unteren Frequenzbandes und bei dem oberen Frequenzband die Differenz zwischen Empfangs frequenz des oberen Frequenzbandes und der Mischoszillatorfrequnez verwendet werden. In vorteilhafter Weise können so für beide Frequenzbänder diegleichen Mischfrequenzen verwendet werden, wobei im Idealfall der Frequenzumfang des Mischozillators auf das breitere der beiden zu mischenden Frequenzbänder beschränkt bleibt.

Auf diese Weise wird auch bei Mehrbandempfängern mit relativ weit auseinanderliegende Funkbändern nur ein gemeinsamer Mischoszillator benötigt. Auch bei Anwendung des erfindungsgemäßen Zweibandempfänger-Konzeptes -Konzeptes für jeweils nur ein einziges Band (z.B. GSM auf 900 MHz oder DCS 1800 auf etwa 1,8 GHz) ergeben sich technische Vorteile und Kostenersparnis, denn für beide Frequenzbänder kann dadurch der gleiche Satz von Bauelementen verwendet werden, wodurch die Kosten reduziert werden. Zudem verringert sich durch die hohe Zwischenfrequenz der Raumbedarf der Filter, was besonders bei Handfunkgeräten, die eine möglichst kleine Bauform aufweisen sollen, wichtig ist.

Ist beispielsweise die Frequenz des zweiten Frequenzbandes doppelt so hoch wie die Frequenz des ersten Frequenzbandes, so führt dies zu einer Zwischenfrequenz, die der Hälfte des ersten Frequenzbandes bzw. einem Viertel des zweiten Frequenzbandes entspricht. Für Funkbänder im GHz-Bereich ist eine solche Zwischenfrequenz ungewöhlich hoch, was eine besondere Beachtung der Nebenempfangsstellen erforderlich macht.

Als besonders vorteilhaft hat es sich bei diesem Konzept herausgestellt als Zwischenfrequenzfilter Oberflächenwellenfilter zu benutzen. Bei diesen hohen Frequenzen sind diese Filter besonders klein und preiswert und unterstützen so das Konzept einer möglichst kleinen Bauform. Durch die hohe Zwischenfrequenz liegt auch die Spielgelfrequenz sehr weit entfernt, wodurch auch der Filteraufwand in der NF-Vorverstärkerstufe stark vermindert wird.

Durch die verminderte Nahselektionsanforderung können somit in der HF-Vorstufe sehr kleine und preiswerte Oberflächenwellenfilter verwendet werden. Es hat sich gezeigt, daß durch die erfindungsgemäßen Maßnahmen ein GSM oder DCS-1800-Empfänger etwa 3 mal kleiner hergestellt werden kann, als der konventionelle Superhet-Empfänger.

Die Erfindung wird nun anhand eines in den Figuren dargestellten Ausführungsbeispiels näher beschrieben. Es zeigen:
- Fig. 1: Eine Schaltungsanordnung für einen Mehrbandempfänger entsprechend der Erfindung.
- Fig. 2: Eine Darstellung der Lage des Mischozillatorsfrequenzbandes im Bezug zu einem erstem und einem zweiten Frequenzband

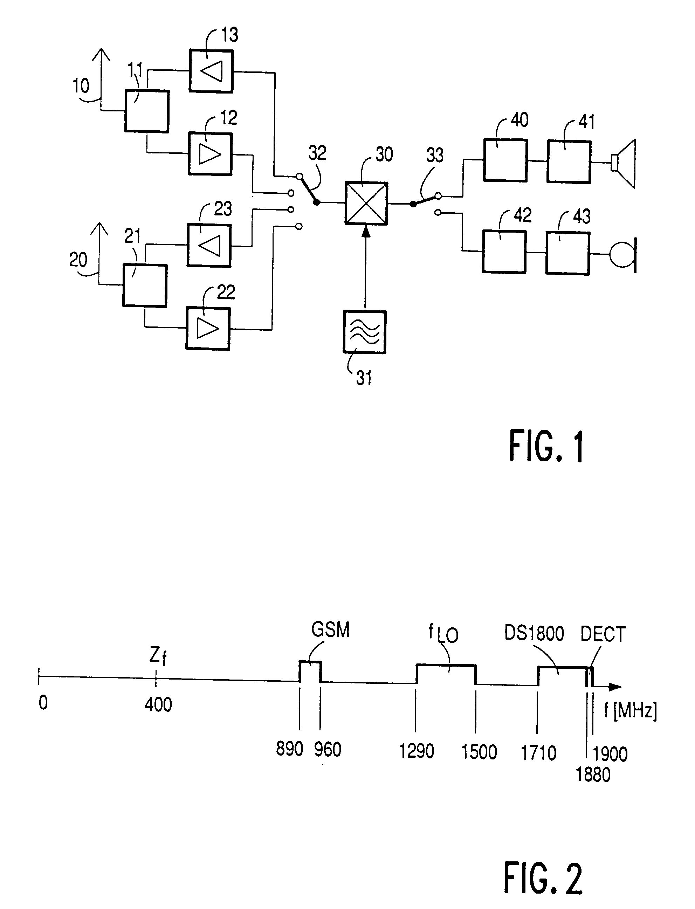

Figur 1 zeigt die beste Ausführungsform eines Mobilfunkgerätes, welches die Teilnahme an drei verschiedenen, in unterschiedlichen Frequenzbändern befindlichen Funkdiensten gestattet. Im Ausführungsbeispiel handelt es sich bei dem ersten Funkdienst um das europäische Mobilfunksystem GSM, welchem das Frequenzband im Bereich von 890 - 960 Mhz zugeordnet ist. Dem zweiten, zur Zeit der Anmeldung sich im Planungsstadium befindlichen Mobilfunksystem DCS 1800 ist das Frequenzband im Bereich von 1710 - 1880 Mhz zugeordnet. An dieses Frequenzband schließt sich von 1880 - 1900 MHz das für den DECT-Standard (Digital European Cordless Telephone) vorgesehene dritte Frequenzband an.

Da zweites und drittes Frequenzband frequenzmäßig beieinanderliegen, ist für diese beiden Frequenzbänder im Ausführungsbeispiel eine gemeinsame Antenne 20, eine gemeinsame Antennenweiche 21, eine gemeinsame Hochfrequenzeingangsstufe 22 mit entsprechender Vorselektion und eine gemeinsame Sendeendstufe 23 vorgesehen. Da gegenüber diesen beiden Frequenbändern das erste Frequenzband auf etwa der halben Frequenz liegt, ist für das erste Frequenzband eine separate Antenne 10, eine separate Antennenweiche 11, eine separate Hochfrequenzeingangsstufe 12 und eine separate Sendeendstufe 13 vorgesehen. Weiterhin weist das in Fig. 1 dargestellte Mobilfunkgerät einen gemeinsamen Mischer 30, einen gemeinsamen Mischoszillator 31 sowie Umschalteinrichtungen 32 und 33 auf. Außerdem ist eine ZF-Verarbeitungseinrichtung 40, ein mit einem Lautsprecher gekoppelter Demodulator 41 sowie eine ZF-Verarbeitungseinrichtung 42 und ein mit einem Mikrofon gekoppelter Modulator 43 vorgesehen.

Wie in Figur 2 dargestellt, erstreckt sich bei den im Ausführungsbeispiel gewählten Funksystemen das Frequenzband des GSM-Systems über 70 MHz, die sich aneinander anschließenden Frequenzbänder von DCS 1800 und DECT jedoch über 190 MHz. Wird als erste Mischfrequenz genau das arithmetische Mittel der Mittenfrequenzen dieser beiden Frequenzbänder gewählt, so würde sich eine mittlere Mischoszillatorfrequenz f_{LO} von 1390 MHz ergeben. Dies ergibt eine Zwischenfrequenz f_{Zf} von 465 MHz.

Der geringst erzielbare Abstimmbereich des Mischoszillators richtet sich nach der größeren Bandbreite der beiden Funksysteme. Er beträgt somit hier im Ausführungsbeispiel 190 MHz. Bei dem im Ausführungsbeispiel gewählten Frequenzbändern läßt sich die Zwischenfrequenz im Bereich von 410 - 470 MHz beliebig wählen, ohne daß sich hierdurch der minimale Oszillatorabstimmbereich von 190 MHz vergrößert wird. Jede abweichende Wahl der Zwischenfrequenz außerhalb dieses Bereiches erfordert einen entsprechend höheren Abstimmbereich des Mischoszillators. So erhöht sich im Ausführungsbeispiel der minimale Abstimmbereich des Mischoszillators von 190 MHz für jede Frequenzabweichung der Zwischenfrequenz aus dem Bereich von 410 - 470 MHz heraus um das Doppelte der Frequenzabweichung. Zur Erzielung einer möglichst hohen spektralen Güte des Mischoszillators ist eine Zwischenfrequenz zu wählen, die nach Möglichkeit im minimalen Mischoszillatorabstimmbereich oder zumindest nahe an diesem minimalen Abstimmbereich liegt.

Durch die relativ hohe Zwischenfrequenz ist die Wahlfreiheit der genauen Zwischenfrequenz durch Nebenempfangsstellen stark eingeschränkt. Nebenempfangsstellen sind Eingangsfrequenzen, die durch Oberwellen von Störsignalen auf diesen Frequenzen und Oberwellen der Mischfrequenz genau auf die gewählte Zwischenfrequenz abgebildet werden. Im Ausführungsbeispiel sind daher in den Empfangseingangsstufen 12, 22 Oberflächenwellenfilter vorgesehen, welche Nebenempfangsstellen, die außerhalb des Empfangsbandes liegen, hinreichend dämpfen. Nebenempfangsstellen innerhalb des jeweils gewählten Empfangsbandes können nur durch den Mischvorgang selbst gedämpft werden. Hier eignet sich insbesondere ein Ringmischer, welcher bei entsprechender Mischersymetrie eine ausreichende Dämpfung von Nebenempfangsstellen innerhalb des Empfangsbandes ermöglicht.

Alternativ ist auch ein Gilbertzellen-Mischer mit hoher Symmetrie geeignet. Der Vorteil eines Gilbertzellenmischer besteht darin, daß er sich integrieren läßt. In diesem Fall sind für Sende- und Empfangs zweig getrennte Mischer erforderlich.

Es hat sich gezeigt, daß Zwischenfrequenzbereiche, die Mischprodukte niedriger Ordnung des Empfangs-Eingangssignals und der Mischfrequenz enthalten, vergleichsweise hohe Pegel erreichen können, die ein schwaches Nutzsignal völlig überdecken würden. In dieser Hinsicht hat sich eine Zwischenfrequenz bei 400 MHz als am besten geeignet erwiesen. Dadurch wird der zuvor erläuterte, für den VCO Mischfrequenzbereich um nur 10 MHz nach unten verschoben, was sich als bester Kompromiß zwischen minimalen VCO-Abstimmbereich und akzeptabler Nebenempfangsunterdrückung erwiesen hat.

## Patentansprüche

1. Funkgerät für die Funksysteme GSM oder DCS 1800 oder DECT, mit folgenden Merkmalen:
- daß nur ein gemeinsamer Mischoszillator (31) vorgesehen ist, dessen Frequenz ungefähr in der Mitte zwischen dem ersten Band GSM und dem zweiten Band DCS 1800 und DECT liegt,
- daß mittels für Sende- und Empfangszweig jeweils getrennter, integrierter hochsymmetrischer Gilbertzellenmischer (30) zur Minimierung der Inband-Nebenempfangsstellen eine Umsetzung von/zu ZF-Verarbeitungseinrichtungen (40, 42) erfolgt, deren Frequenz für Sende- und Empfangszweig gleich ist und bei 380 - 470 MHz, vorzugsweise bei 400 MHz, liegt,
- wobei die ZF-Verarbeitungseinrichtungen (40, 42) Zwischenfrequenzfilter enthalten, die als Oberflächenwellenfilter ausgebildet sind.

2. Funkgerät nach Anspruch 1,
dadurch gekennzeichnet,
daß es zwischen den Funksystemen GSM und/oder DCS 1800 und/oder DECT umschaltbar ist.

3. Funkgerät nach Anspruch 2,
dadurch gekennzeichnet,
daß eine Umschaltvorrichtung (32) zwischen Hochfrequenzeingangsstufen (12, 22), Sendeendstufen (13, 23) und den für Sende- und Empfangszweig jeweils getrennten integrierten Mischern (30) vorgesehen ist.

4. Funkgerät nach einem der vorigen Ansprüche,
dadurch gekennzeichnet,
daß das Transceiverkonzept unter Verwendung des gleichen Satzes von Bauelementen (30, 31, 40, 41, 42, 43) für einen Mehrband-Transceiver für mindestens zwei verschiedene Funksysteme, oder aber auch nur für ein einziges Band (z.B. GSM auf 900 MHz oder DCS 1800 auf 1,8 GHz) anwendbar ist.

## Claims

1. A radio transceiver for the GSM, DCS 1800 or DECT radio systems, characterized in that only one common mixing oscillator (31) is provided whose frequency lies approximately midway between the first GSM band and the second DCS 1800 and DECT band, in that by means of a respective separate integrated highly symmetrical Gilbert cell mixer (30) for the sending and receiving portion for minimiziation of the in-band spurious responses a conversion is made from/to IF processing arrangements (40, 42) whose frequency is the same for sending and receiving branch and is situated at 380 - 470 MHz, preferably at 400 MHz, while the IF processing arrangements (40, 42) include intermediate frequency filters which are arranged as a surface acoustic wave filter.

2. A radio transceiver as claimed in Claim 1, characterized in that the radio transceiver can be switched between the GSM and/or DCS 1800 and/or DECT radio systems.

3. A radio transceiver as claimed in Claim 2, characterized in that a changeover switch (32) is inserted between high-frequency input stages (12, 22), transmitter output stages (13, 23) and the integrated mixers (30) which are separate for sending and receiving branch.

4. A radio transceiver as claimed in one of the previous claims, characterized in that when the same set of modules (30, 31, 40, 41, 42, 43) is used for a multiband transceiver, the transceiver concept is applicable to at least two different radio systems, or also only for a single band (e.g. GSM at 900 MHz. or DCS 1800 at 1.8 GHz).

## Revendications

1. Appareil de radiocommunication pour les systèmes radio GSM ou DCS 1800 ou DECT présentant les caractéristiques suivantes :
- que seul un oscillateur mixte commun (31) est prévu et sa fréquence se situe approximativement à mi-chemin entre la première gamme GSM et la deuxième gamme DCS 1800 et DECT,
- qu'à l'aide de la branche de transmission et de réception de mélangeurs à cellules de Gilbert (30) intégrés hautement symétriques et respectivement séparés en vue de minimiser les sites de réception secondaires dans la gamme il se produit une transformation de/vers les dispositifs de traitement ZF (40, 42) dont la fréquence pour les branches de transmission et de réception est égale et se situe entre 380-470 MHz, de préférence à 400 MHz,
- les dispositifs de traitement ZF (40, 42) contenant des filtres de fréquence intermédiaire qui sont conçus comme des filtres de surface.

2. Appareil de radiocommunication selon la revendication 1,
caractérisé en ce qu'il peut être commuté entre les systèmes radio GSM et/ou DCS 1800 et/ou DECT.

3. Appareil de radiocommunication selon la revendication 2,
caractérisé en ce
qu'un dispositif de commutation (32) est prévu entre les étages d'entrée à haute fréquence (12, 22), les étages de sortie de transmission (13, 23) et les mélangeurs (30) intégrés respectivement séparés pour les branches de transmission et de réception.

4. Appareil de radiocommunication selon l'une des revendications précédentes, caractérisé en ce
que le concept de l'émetteur/récepteur peut être utilisé en mettant en oeuvre le même jeu de modules (30, 31, 40, 41, 42, 43) pour un émetteur/récepteur multibande pour au moins deux systèmes radio différents mais aussi pour une seule gamme (par exemple GSM sur 900 MHz ou DCS 1800 sur 1,8 GHz).
